# EUROPEAN PATENT APPLICATION

(11) **EP 4 487 691 A1**
(43) Date of publication of application: **08.01.2025**
(21) Application number: 23183146.2
(22) Date of filing: 03.07.2023
(51) Int. Cl.: A23F 3/14

(54) **VITAMIN FORTIFIED BEVERAGE COMPOSITION**

(71) Applicant: Ekaterra Research and Development UK Limited, Sharnbrook, Bedfordshire MK44 1LQ (GB)
(72) Inventor: The designation of the inventor has not yet been filed
(74) Representative: Mewburn Ellis LLP

(57) **Abstract**

The present invention provides a beverage composition comprising;
a) one or more vitamins;
b) a first polysaccharide comprising gum arabic and/or xanthan gum;
c) optionally, a second polysaccharide comprising maltodextrin and/or modified starch; and,
d) a beverage product.

The present invention also provides a process for preparing a beverage composition.

## Description

### Field of the Invention

The present invention relates to a beverage composition. In particular, the present invention relates to a vitamin fortified beverage composition.

### Background

Vitamins are considered essential nutrients which serve numerous important functions within the body. For instance, they help shore up bones, heal wounds, and bolster the immune system. They also convert food into energy and repair cellular damage. Due to the important bodily roles vitamins play in the body and the fact they many are not produced naturally by the human body, it is recommended that every person consumes a recommended daily amount (RDA) of each of these essential vitamins.

However, in general, most individuals struggle to meet the recommended daily amounts (RDAs) for these essential vitamins from their regular diet alone. Thus, vitamin deficiency is becoming a global and ever-increasing problem, and one that is often cited as a neglected public health problem.

To help address this problem, the food and beverage industry has attempted to create vitamin fortified compositions to increase vitamin intake by consumers. However, fortifying food and drink products with vitamins remains challenging.

For some vitamins, degradation through exposure to air, light, acid, temperature, and other ingredient interactions results in significant loss of the vitamin over time. This results in low levels of vitamins being transferred to the individual through consumption of the beverage or foodstuff.

Furthermore, some vitamins are water-soluble, while other vitamins are fat-soluble. This difference in physical properties of the vitamins can make it difficult to get vitamins to adhere to certain beverages / foodstuff, which again can result in poor delivery of the vitamins to the consumer.

Further still, due to the different physical properties of across the spectrum of vitamins, often different systems are required to sufficiently coat each individual vitamin to each beverage or foodstuff and successfully allow sufficient amounts to be delivered to the consumer. These differences in systems also make it challenging to deliver multiple vitamins in one beverage or foodstuff, and can also drive up expense for producing vitamin fortified products.

Also, efforts to improve the binding of vitamins to beverages and foodstuff is often hampered by need for very low-cost coating technology coupled with the need for systems that are safe for human consumption and those which have no impact on the sensorial properties of these products (e.g. taste, appearance, aroma etc.).

Thus, there remains a need for a cost-efficient, simple and versatile method for coating vitamins to a beverage or foodstuff that addresses some of the above-mentioned problems.

The present invention seeks to address this problem by providing a simple and cost-efficient beverage composition which significantly improves the delivery of several key vitamins from vitamin fortified beverages to the end consumer, as well as beneficially allowing for multiple vitamins to be fortified in one beverage product.

### Summary of the invention

In a first aspect, the present invention provides a beverage composition comprising;
a) one or more vitamins;
b) a first polysaccharide comprising gum arabic and/or xanthan gum;
c) optionally, a second polysaccharide comprising maltodextrin and/or modified starch; and,
d) a beverage product,

In another aspect, the present invention provides a process for preparing a tea composition comprising the steps of:
a) preparing a coating solution by adding, and optionally mixing, one or more vitamins, a first polysaccharide comprising gum arabic and/or xanthan gum and optionally a second polysaccharide comprising maltodextrin and/or modified starch with water;
b) adding the coating solution of step a) to a beverage product and mixing for a duration of between 1 and 30 minutes;
c) drying the mixture of step b) at a temperature of between 90 °C and 160 °C for a duration of between 2 and 60 minutes.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The disclosure of the invention as found herein is to be considered to cover all embodiments as found in the claims as being multiply dependent upon each other irrespective of the fact that claims may be found without multiple dependency or redundancy.

In a first aspect, the present invention provides a beverage composition comprising;
a) one or more vitamins;
b) a first polysaccharide comprising gum arabic and/or xanthan gum;
c) optionally, a second polysaccharide comprising maltodextrin and/or modified starch; and,
d) a beverage product.

### Vitamins

A vitamin will be understood to be an organic substance that is required by the human body for growth and good health.

Non-limiting examples of vitamins of the present invention include vitamin C, vitamin D (e.g. vitamin D2 and vitamin D3), 8 vitamins (such as vitamin B6, vitamin B12, vitamin B2, vitamin B3, vitamin B9, vitamin B7 (Biotin) etc.) vitamin E, vitamin A, vitamin B1, vitamin K and folate.

It will be understood that the vitamins of the present invention may be fat-soluble vitamins, including but not limited to vitamin D, vitamin A, vitamin E and vitamin K. The vitamins of the present invention may also be water-soluble vitamins, including but not limited to vitamin C, vitamin B6 and vitamin B12.

In certain embodiments, the one or more vitamins are selected from vitamin C, vitamin D, vitamin B6, vitamin B12, vitamin E, vitamin A, vitamin B1, vitamin B2, vitamin B3, vitamin B9, vitamin K and combinations thereof.

Suitably, the one or more vitamins are selected from vitamin C, vitamin D, vitamin B6, vitamin B12, vitamin B3, vitamin B9 and combinations thereof. More suitably, the vitamin is selected from vitamin C, vitamin D, vitamin B6, vitamin B12 and combinations thereof.

In certain embodiments, the one or more vitamins are selected from fat-soluble vitamins (e.g. vitamin D, vitamin A, vitamin E and vitamin K).

In other embodiments, the one or more vitamins are selected from water-soluble vitamins (e.g. vitamin C, vitamin B6 and vitamin B12).

In some embodiments, the vitamin is vitamin C.

It will be appreciated that vitamin C refers to ascorbic acid and derivatives thereof (e.g. all salts, solvates and hydrates thereof).

In certain embodiments, vitamin C is selected from L-ascorbic acid, ascorbyl glucoside, magnesium ascorbyl phosphate and an ascorbate (e.g. sodium or potassium ascorbate). Preferably, vitamin C is L-ascorbic acid.

In certain embodiments, the vitamin C is not an ascorbate (e.g. sodium or potassium ascorbate).

In some embodiments, the vitamin is vitamin D.

It will be appreciated that vitamin D refers to both vitamin D3, vitamin D2 and all derivatives thereof (e.g. all salts, solvates and hydrates thereof). Preferably, vitamin D is vitamin D3.

Vitamin D2 is otherwise known as ergocalciferol. Vitamin D3 is otherwise known as cholecalciferol.

In some embodiments, the vitamin is vitamin B12.

It will be appreciated that vitamin B12 refers to methylcobalamin, cyanocobalamin, adenosylcobalamin, hydroxocobalamin and derivatives thereof (e.g. all salts, solvates and hydrates thereof). Suitably, vitamin B12 is methylcobalamin, cyanocobalamin and derivatives thereof (e.g. all salts, solvates and hydrates thereof). Most suitably, vitamin B12 is methylcobalamin and derivatives thereof (e.g. all salts, solvates and hydrates thereof).

In some embodiments, the vitamin is vitamin B6.

It will be appreciated that vitamin B6 refers to pyridoxine, pyridoxal, pyridoxamine and derivatives thereof (e.g. all salts, solvates and hydrates thereof). Suitably, vitamin B6 is pyridoxine and derivatives thereof (e.g. all salts, solvates and hydrates thereof), such as pyridoxine hydrochloride.

The amount of vitamin used in the beverage composition of the present invention is preferably in the range of 0.00001 to 40%, more preferably 0.00001 to 30%, further preferably 0.0001 to 25%, still more preferably 0.001 to 20%, yet more preferably 0.01 to 15% and even more preferably 0.1 to 15%, and most preferably 0.5 to 15% by weight of the composition.

In some embodiments, the amount of vitamin used in the beverage composition of the present invention is preferably in the range of 0.00001 to 20%, more preferably 0.00001 to 15%, further preferably 0.0001 to 10%, still more preferably 0.001 to 10%, yet more preferably 0.01 to 10% and even more preferably 0.1 to 8%, and most preferably 0.5 to 5% by weight of the composition.

When the vitamin is vitamin C, the amount of vitamin used in the beverage composition of the present invention is preferably in the range of 0.1 to 25%, more preferably 0.2 to 20%, still more preferably 0.5 to 15%, and most preferably 2 to 15% by weight of the composition.

When the vitamin is vitamin D and/or vitamin B12, the amount of vitamin used in the beverage composition of the present invention is preferably in the range of 0.00001 to 15%, more preferably 0.00001 to 10%, still more preferably 0.0001 to 8%, and most preferably 0.01 to 6% by weight of the composition.

When the vitamin is vitamin B6, the amount of vitamin used in the beverage composition of the present invention is preferably in the range of 0.01 to 15%, more preferably 0.01 to 10%, still more preferably 0.1 to 8%, and most preferably 0.2 to 6% by weight of the composition.

### Polysaccharides

The beverage composition of the present invention comprises a first polysaccharide. The first polysaccharide comprises gum arabic and/or xanthan gum. Preferably, the first polysaccharide is selected from gum arabic or xanthan gum. Most preferably, the first polysaccharide is gum arabic. Gum arabic is also commonly known as gum acacia. It is an edible water-soluble gum widely used in food industries as stabilizer and/or thickener.

The amount of first polysaccharide (gum arabic and/or xanthan gum) in the beverage composition of the present invention preferably is in the range of 0.1 to 25%, more preferably 0.2 to 20%, further preferably 0.2 to 15%, still more preferably, 0.5 to 10%, yet more preferably 1 to 10%, even more preferably 2 to 10% and most preferably 3 to 8% by weight of the composition.

Preferably, the mass (weight) ratio of vitamin to first polysaccharide (gum arabic and/or xanthan gum) in the beverage composition is between 20:1 and 1:20. More preferably, the mass (weight) ratio of vitamin C to first polysaccharide (gum arabic and/or xanthan gum) in the beverage composition is between 20:1 and 1:10. Even more preferably, the mass (weight) ratio of vitamin C to first polysaccharide (gum arabic and/or xanthan gum) in the beverage composition is between 15:1 and 1:5. Still more preferably, mass (weight) ratio of vitamin C to first polysaccharide (gum arabic and/or xanthan gum) in the beverage composition is between 15:1 and 1:1. Most preferably, the mass (weight) ratio of vitamin C to first polysaccharide (gum arabic and/or xanthan gum) in the beverage composition is between 15:1 and 5:1.

In some embodiments, the mass (weight) ratio of vitamin to first polysaccharide (gum arabic and/or xanthan gum) in the beverage composition is between 20:1 and 1:1, preferably between 20:1 and 3:1, more preferably between 20:1 and 6:1, and most preferably between 15:1 and 10:1.

In other embodiments, the mass (weight) ratio of vitamin to first polysaccharide (gum arabic and/or xanthan gum) in the beverage composition is between 10:1 and 1:20, preferably between 5:1 and 1:20, more preferably between 1:1 and 1:15, and most preferably between 1:5 and 1:15.

The beverage composition of the present invention also optionally comprises a second polysaccharide. The second polysaccharide comprises maltodextrin and/or modified starch. Preferably, the second polysaccharide is maltodextrin.

Maltodextrin is a well-known food additive. It is a flavourless substance. It is generally produced from vegetable starch by hydrolysis. The starch is preferably corn or wheat.

The amount of second polysaccharide (e.g. maltodextrin) used in the beverage composition of the present invention is preferably in the range of 0.1 to 25%, more preferably 0.2 to 20%, further preferably 0.2 to 15%, still more preferably, 0.5 to 10%, yet more preferably 1 to 10%, even more preferably 2 to 10% and most preferably 3 to 8% by weight of the composition.

Preferably, the mass (weight) ratio of vitamin to second polysaccharide (e.g. maltodextrin) in the beverage composition is between 20:1 and 1:20. More preferably, the mass (weight) ratio of vitamin C to second polysaccharide (e.g. maltodextrin) in the beverage composition is between 20:1 and 1:10. Even more preferably, the mass (weight) ratio of vitamin C to second polysaccharide (e.g. maltodextrin) in the beverage composition is between 15:1 and 1:5. Still more preferably, mass (weight) ratio of vitamin C to second polysaccharide (e.g. maltodextrin) in the beverage composition is between 15:1 and 1:1. Most preferably, the mass (weight) ratio of vitamin C to second polysaccharide (e.g. maltodextrin) in the beverage composition is between 15:1 and 5:1.

In some embodiments, the mass (weight) ratio of vitamin to second polysaccharide (e.g. maltodextrin) in the beverage composition is between 20:1 and 1:1, preferably between 20:1 and 3:1, more preferably between 20:1 and 6:1, and most preferably between 15:1 and 10:1.

In some embodiments, the mass (weight) ratio of vitamin to second polysaccharide (e.g. maltodextrin) in the beverage composition is between 10:1 and 1:20, preferably between 5:1 and 1:20, more preferably between 1:1 and 1:15, and most preferably between 1:5 and 1:15.

The second polysaccharide may comprise modified starch (e.g. OSA starch).

It will be appreciated that the term modified starch will be understood as being any naturally occurring starch that is modified by physical, chemical or enzymatic processes. Preferably, the modified starch is acetylated starch, dextrin or cross-linked starch.

The amount of modified starch used in the composition of the present invention is preferably in the range of 0.1 to 25%, more preferably 0.2 to 20%, further preferably 0.2 to 15%, still more preferably, 0.5 to 10%, yet more preferably 1 to 10%, even more preferably 2 to 10% and most preferably 3 to 8% by weight of the composition.

Preferably, the mass (weight) ratio of the first polysaccharide (e.g. gum arabic) to the second polysaccharide (e.g. maltodextrin) is from 10:1 to 1:10, more preferably 8:1 to 1:8, even more preferably 5:1 to 1:5, still more preferably 3:1 to 1:3, yet more preferably 2:1 to 1:2, still even more preferably 1.5:1 to 1:1.5 and most preferably 1:1.

The combined amount of the first polysaccharide (e.g. gum arabic) and the second polysaccharide (e.g. maltodextrin) is between 0.1 and 20 % by weight of the composition. Preferably, the combined amount of the first polysaccharide (e.g. gum arabic) and the second polysaccharide (e.g. maltodextrin) is between 0.5 and 15 % by weight of the composition, more preferably between 1 and 10 % by weight of the composition, still more preferably between 1 and 8 % by weight of the composition, and most preferably between 2 and 6 % by weight of the composition.

### The beverage product

It will be appreciated that the beverage product may be any beverage precursor to which water (e.g. boiling water) may be added to prepare a beverage infusion. Non-limiting examples of the beverage product are tea leaf products, herbal (tea) products, coffee beans, ground coffee powder, cocoa products, instant tea products, instant coffee products and the like.

The amount of beverage product (e.g. leaf tea product) in the composition is preferably in the range of 75 to 99%, more preferably 80 to 98.5%, even more preferably 85 to 98.5%, yet more preferably 87 to 98.5%, still more preferably 90 to 98.5% and most preferably 92 to 98.5% by weight of the composition.

In certain embodiments, the composition of the present invention comprises a leaf tea product. A leaf tea product preferably means a tea product which is obtained after the tea manufacturing processes and comprise less than 10%, preferably less than 7% and most preferably less than 5% moisture by weight of the leaf tea product.

The leaf tea product may preferably be selected from a black tea product, a green tea product, an oolong tea product, a white tea product or blends thereof.

Black tea generally refers to fermented tea and produced by processing fresh tea leaves. Fresh tea leaf refers to tea leaf, buds and/or stem that have never been dried to a water content of less than 30% by weight, and usually have moisture content in the range 60 to 90%. Black tea has different characteristics to green tea. Black tea is more astringent in taste and less bitter than green tea. The redness of black tea liquor is also significantly higher than that of green tea. Black tea also contains higher level of theaflavins.

In the process of black tea, fermentation refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

Green tea refers to substantially unfermented tea. Green tea has different characteristics than black tea. Green tea liquor is light in colour unlike black tea. Green tea also enriched with catechins and low or no amount of theaflavins.

Oolong tea refers to semi-fermented tea.

The preferred leaf tea product for the purpose of the present invention is either black tea or green tea, the most preferred is black tea.

In certain embodiments, the beverage product is a herbal (tea) product.

For the purpose of the present invention, the term herbal (tea) product may preferably be any (tea) product produced from a herbal plant material which is fit for human consumption. The herbal plant material may preferably comprise the leaves of the plant, roots of the plants, flowers of the plant, fruits of the plants or any other parts of the plants. Preferably, the herbal plant material refers to the leaves of the plant. It will be appreciated that the term herbal (tea) product also encompasses the leaves, stems, roots, flowers, and fruits of shrubs.

Preferably, the herbal (tea) product comprises medicinal plants which preferably means plants that have beneficial properties associated with human health.

In certain preferred embodiments, the herbal (tea) product is selected from a rooibos (tea) product, a hibiscus (tea) product, a chamomile (tea) product, a rosehip (tea) product, a mint (tea) product, a lemon verbena (tea) product, a chicory (tea) product, an orange (tea) product, a yerba mate (tea) product and combinations thereof.

Preferably, the herbal (tea) product is selected from a rooibos (tea) product, a hibiscus (tea) product, a chamomile (tea) product, a lemon verbena (tea) product and combinations thereof. More preferably, the herbal (tea) product is selected from a rooibos (tea) product, a hibiscus (tea) product, a chamomile (tea) product and combinations thereof. Still more preferably, herbal (tea) product is selected from a rooibos (tea) product or a hibiscus (tea) product. Most preferably, the herbal (tea) product is a rooibos (tea) product.

It will be understood that mint (tea) products may include, for example, peppermint (tea) products, spearmint (tea) products, apple mint (tea) products, Moroccan mint (tea) products and the like.

It will also be appreciated that in some embodiments, the beverage product is an instant beverage, such as instant coffee and tea powders. Instant beverage products are usually produced from aqueous extracts made in the traditional way. These aqueous extracts may then be subjected to a clarification step (such as "de-creaming" used in the manufacture of tea powders) and/or concentrated under vacuum or by reverse osmosis. In the case of granular coffee production, the aqueous extract may also be foamed at this point. The resulting extract is then dried by either spray-drying or freeze-drying. If freeze-drying is used, the extract is usually frozen as a thin layer on a freezing belt before being ground in the frozen state. The resulting granules are usually poured into trays and freeze-dried at low pressure.

The instant beverage product is thus preferably in the form of a powder or granule produced by extracting the beverage product (e.g. tea leaf, coffee etc.) with a solvent (e.g. water), optionally clarifying the extract, and drying it (e.g. spray-drying or freeze-drying) to obtain a powder or granules.

The instant beverage product is thus preferably in the form of a powder or granule, preferably a powder. The instant beverage product may therefore be a powder or granule with an average particle size of 1200 µm or less, preferably 1100 µm or less, and most preferably 1000 µm or less.

The instant beverage product is preferably soluble in water with temperature in the range from 4°C to 100°C, more preferably from 6° C to 90°C and most preferably from 10°C to 80°C.

Non-limiting examples of possible instant beverage products include an instant tea product, an instant herbal product, an instant coffee product and an instant cocoa product.

### Other additives

In certain embodiments, the beverage composition may comprise one or more buffering agents. It will be understood that a buffering agent is any agent (compound) which may be added to the composition to maintain the pH of the beverage infusion within a specific range. Preferably, the buffering agent is a compound which can maintain the pH of the beverage infusion within the range of 4 to 6, more preferably within a range of 4.5 to 6, still more preferably within a range of 4.8 to 5.8, yet more preferably within a range of 5 to 5.6, and most preferably within a range of 5 to 5.3.

A non-limiting list of suitable buffering agents include citrates, carbonates, bicarbonates, phosphates, borates, glycine and combinations thereof. In certain embodiments, the buffering agent is a basic form of the acid included in the composition of the invention. For example, when the acid is citric acid, the buffering agent may be a citrate (e.g. sodium or potassium citrate).

In certain embodiments, the buffering agent is selected from a citrate, a carbonate a bicarbonate, a phosphate or combinations thereof. Suitably, the carbonate is a potassium or sodium carbonate. Suitably, the bicarbonate is a potassium or sodium bicarbonate. Suitably, the citrate is a sodium or potassium citrate.

In certain preferred embodiments, the buffering agent is sodium citrate.

The buffering agent may be present in any suitable amount. In some embodiments, the buffering agent is present in an amount of between 0.1 and 5% by weight of the composition. Preferably, the buffering agent is present in an amount of between 0.5 and 4% by weight of the composition, more preferably between 0.5 and 3% by weight of the composition.

In some embodiments, the beverage composition may also comprise sugar and/or one or more sweeteners. A non-limiting list of examples of possible sweeteners include acesulfame K, aspartame, saccharin, sorbitol, stevia, sucralose and xylitol.

It will also be understood that the beverage composition of the present invention may comprise one or more additional agents. For example, the beverage composition may comprise one or more nutrients, flavourings, metals and minerals, bulking agents, anti-caking agents (e.g. silicon dioxide), cocoa extract etc.

A non-limiting list of possible flavourings include vanilla, fruit (e.g. strawberry, lemon, berry), ginger, cardamom, all spices, jasmine and tea essence (e.g. earl grey, black tea).

A non-limiting list of possible nutrients include metal and minerals (e.g. zinc, iron, calcium, sodium, magnesium) and essential fatty-acids (e.g. omega-3 and omega-6). Preferably, the one or more additional nutrients is selected from metals and minerals (e.g. zinc, iron, calcium, sodium), and most preferably iron and/or zinc.

A non-limiting list of possible bulking agents include starch, carboxymethyl cellulose and sugar (e.g. dextrose).

It will be appreciated that the above additional agents may be added in any suitable amount. Preferably, the one or more additional agents are each independently added in an amount of between 0.01 and 5 % by weight of the composition, preferably between 0.05 and 4 % by weight of the composition, more preferably between 0.1 and 3 % by weight of the composition, and most preferably between 0.5 and 2 % by weight of the composition.

### Process of the invention

The present invention also provides a process for preparing a beverage composition comprising the steps of:
a) preparing a coating solution by adding, and optionally mixing, one or more vitamins, a first polysaccharide comprising gum arabic and/or xanthan gum and optionally a second polysaccharide comprising maltodextrin and/or modified starch with water;
b) adding the coating solution of step a) to a beverage product and mixing for a duration of between 1 and 30 minutes;
c) drying the mixture of step b) at a temperature of between 90 °C and 160 °C for a duration of between 2 and 60 minutes.

### Step a)

It will be understood that the one or more vitamins, the first polysaccharide and the second polysaccharide may be able of those described herein above in relation to the first aspect of the invention. For example, the vitamin is preferably vitamin C, vitamin D, vitamin B6, vitamin B12, vitamin E, vitamin A, vitamin B1, vitamin B2, vitamin B3, vitamin B9, vitamin K and combinations thereof. The first polysaccharide is preferably gum arabic and the second polysaccharide is preferably maltodextrin.

It will also be understood that the coating solution prepared in step a) may be prepared using any conventional technique. Typically, this involves dissolving or dispersing (optionally with agitation or mixing) a predetermined amount of vitamin (e.g. vitamin C, vitamin D, vitamin B6, vitamin B12), the first polysaccharide (e.g. gum arabic) and optionally the second polysaccharide (e.g. maltodextrin) in water at ambient conditions (e.g. 25 °C and 1 atmosphere).

Fat-soluble vitamins (e.g. vitamin D, vitamin A, vitamin E and vitamin K) may suitably be dissolved in one or more oils before being added to step a). A non-limiting list of suitable oils groundnut oil, vegetable oil, olive oil, rapeseed oil and the like.

The coating solution prepared in step a) may have any suitable vitamin concentration, dependent upon the intended application of the coating solution. Preferably, the vitamin concentration of the coating solution is between 0.1 and 40 % w/v, more preferably 0.1 and 35 % w/v, still more preferably between 0.1 and 30 % w/v, even more preferably between 0.1 and 25 % w/v, and most preferably between 1 and 25 % w/v.

In certain embodiments, the vitamin concentration of the coating solution is between 1 and 40 % w/v, more preferably 2 and 35 % w/v, still more preferably between 5 and 30 % w/v, even more preferably between 10 and 30 % w/v, and most preferably between 15 and 25 % w/v.

In certain embodiments, the weight (mass) ratio of vitamin to water used in the coating solution of step a) is 1:2 or greater, preferably 1:3 or greater, more preferably 1:35 or greater, and most preferably 1:4 or greater.

In certain embodiments, the weight (mass) ratio of vitamin to water used in the coating solution of step a) is between 1:2 and 2.0, preferably between 1:2 and 1:8, more preferably between 1:3 and 1:6, still more preferably between 1.3 and 1.6, and most preferably between 1.4 and 1.5.

Preferably, the combined concentration of the first polysaccharide and the optional second polysaccharide in the coating solution of step a) is between 1 and 20 % w/v, preferably, 1 and 15 % w/v, more preferably between 2 and 10 % w/v and most preferably between 2 and 8 % w/v.

### Step b)

It will be appreciated that the beverage product of step b) may be any one of the beverage products described hereinabove. Preferably, the beverage product is a leaf tea product (e.g. a black tea leaf product).

Following the addition of the coating solution of step a) to a beverage product, the materials are mixed. Any suitable method of mixing may be used in this step, such as mechanical stirring or agitation. It will be appreciated that both addition and mixing may be conducted at any suitable temperature. Preferably, the temperature of addition and mixing is between 10 °C and 50 °C, more preferably between 15 °C and 40 °C and most preferably between 20 °C and 30 °C (e.g. 25 °C).

If any other ingredients are added to the beverage composition (e.g. one or more nutrients, pH regulating agent, flavourings etc.), these are also added during step b).

The duration of the mixing may be varied between 1 and 30 minutes. Preferably, the mixing of step b) is conducted for a duration of between 2 and 30 minutes, more preferably between 5 and 25 minutes, even more preferably between 5 and 20 minutes and most preferably between 8 and 15 minutes.

### Step c)

Step c) comprises drying the mixture of step b) at a temperature of between 90 °C and 160 °C for a duration of between 2 and 60 minutes.

It will be appreciated that any suitable drying step may be used. For instance, the drying step may be carried out using a fluidised bed drier, a freeze-dryer, a vacuum dryer or a microwave drier.

Preferably, the drying step may be carried out using a fluidised bed drier. More preferably, the drying step may be carried out using a fluidised bed drier operated at between 90 °C and 150 °C for between 2 to 45 minutes. More preferably, the drying step may be carried out using a fluidised bed drier operated at between 90 °C and 120 °C for between 2 to 30 minutes. Most preferably, the drying step may be carried out using a fluidised bed drier operated at between 100 °C and 120 °C for between 5 to 25 minutes (e.g. 20 minutes).

The process may further include a final step of blending the vitamin coated beverage product with a non-vitamin coated beverage product of the same type. Preferably, the blend comprises between 1 and 50 % of the vitamin coated beverage product (e.g. leaf tea product) by weight of the beverage product (e.g. leaf tea product). More preferably, the blend comprises between 1 and 40 % of the vitamin coated beverage product (e.g. leaf tea product) by weight of the beverage product (e.g. leaf tea product). Still more preferably, the blend comprises between 1 and 30 % of vitamin coated beverage product (e.g. leaf tea product) by weight of the beverage product (e.g. leaf tea product). Even more preferably, the blend comprises between 1 and 20 % of the vitamin coated beverage product (e.g. leaf tea product) by weight of the beverage product (e.g. leaf tea product). Yet more preferably, the blend comprises between 1 and 10 % of the vitamin coated beverage product (e.g. leaf tea product) by weight of the beverage product (e.g. leaf tea product). Most preferably, the blend comprises between 2 and 8 % of the vitamin coated beverage product (e.g. leaf tea product) by weight of the beverage product (e.g. leaf tea product).

The present invention will now be demonstrated by way of non-limiting examples below. The examples are for illustration only and do not limit the scope of the invention in any manner.

### EXAMPLES

### Materials used

- Black tea leaf was obtained from ekaterra tea Kenya Ltd.
- Chleocalciferol-D3 was obtained from Glanbia.
- L-ascorbic acid was obtained from Sigma Aldrich.
- Methylcobalamin was obtained from Sigma Aldrich.
- Pyridoxine hydrochloride was obtained from Sigma Aldrich.
- Gum acacia was obtained from Office edge India Pvt ltd.
- Maltodextrin was obtained from Roquette.
- OSA starch was obtained from Cargill.

### Vitamin Only Fortification

### Example C1

0.25g of Vit D3 powder was dissolved in 35 ml of water and the mixture was homogenised well using a Silverson mixer at 1000 rpm for 3-5 minutes at 25 °C to prepare a coating solution. 99.75 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 60 °C for 5-6 minutes to get final Vitamin D3 coated tea.

### Example C2

1 mg of methylcobalamin (vitamin B12, solubility: 1.25 g / 100 ml of water at 25 °C) was mixed with 30 ml of distilled water (at 25 °C) to prepare a coating solution. 99.9 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B12 coated tea.

### Example C3

0.4 g of Pyridoxine Hydrochloride (vitamin B6, solubility: 22 g / 100 ml of water at 25 °C) in 30 ml of distilled water (at 25 °C) to prepare a coating solution. 99.4 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B6 coated tea.

### Example C4

30 g of L-ascorbic acid (solubility: 33 g / 100 g water at 25 °C) was mixed in 100 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 10 minutes.

After the above tea products were prepared, the infusions were produced from the tea products using the following protocol.

### Infusion preparation procedure

2 g of the tea product (as prepared above) was taken in a mug and 200 mL of boiling deionised water was then poured into the mug. After 2 minutes of brewing, the content was filtered using a strainer and the filtered tea was taken for further analysis.

### Sample preparation for Vitamin C from tea samples.

For total vitamin C analysis form leaf teas: 1 g ± 0.2 g of sample was taken into a centrifuge tube and 25 mL of 3% metaphosphoric solution was added and vortexed to ensure complete dispersion and then it was sonicated for 15 minutes at 25 °C. The sample tube was allowed to stand for 5 minutes to settle down and then filtered the settled solution through a 0.22 µ polytetrafluoroethylene (PTFE) filter. 1 mL of the filtrate was then transferred to HPLC vial and injected into the HPLC machine. For infused Vit C analysis: the infusion prepared using above mentioned method was directly injected into the HPLC machine - see below for the HPLC run conditions.

### Sample preparation for Vit D from tea samples.

2 g of the tea product (as prepared above) was taken in a mug and 100 mL of boiling deionised water was poured into the mug and stirred 3 times. After 2 minutes of brewing, the content was filtered using a strainer. This infusion was diluted with a solvent mixture of (IPA: DMSO (10:1)) in 1:1 ratio, before being injected into the HPLC machine - see below for the HPLC run conditions.

### Sample preparation for Vit 86 from tea samples.

2 g of the tea product (as prepared above) was taken in a mug and 200 mL of boiling deionised water was poured into the mug. After 2 minutes of brewing, the content was filtered using a strainer and the filtered tea was taken for further analysis.

### Sample preparation for Vit 812 from tea samples.

2 g of the tea product (as prepared above) was taken in a mug and 200 mL of boiling water (Deionised) was poured in it. After 2 minutes of brewing, the content was filtered using a strainer. The infusion was used for below mentioned procedure to enrich the B12 content in samples.

### Extraction and enrichment of Vit 812

10 g of the B12 fortified tea infusion was placed into a 100 mL brown glass volumetric flask with a screw cap. 50 mL of sodium acetate buffer (50 mM), 50 mg a-amylase, 0.5 g pepsin, and 2 mL KCN (Potassium cyanide) solution was then added. The mixture was then shaken before being transferred to a water bath for 30 minutes at 40 °C, wherein the flask was shook every 10 minutes. The flask was then transferred to a water bath at 100 °C for an additional 30 minutes, with shaking every 10 minutes. The flask and mixture were then allowed to cool down to room temperature, optionally with the aid of an ice bath. The volumetric flask was then fill up to the 100 mL mark with sodium acetate buffer (50 mM), before being centrifuged (at 4000 RPM for 15 minutes at 24 °C) and filtered through Whatman 41 filter paper at 24 °C.

### Preconcentration of the sample using Immunoaffinity column

An immunoaffinity preconditioning procedure was used to pre-concentrate the samples. The Immunoaffinity Column (IAC) contains a gel suspension of monoclonal antibodies that are specific to vitamin B12.

### The pre-conditioning was achieved using the following procedure:

Bring the IAC (Immuno Affinity Column) to room temperature prior to use. Twist off the end cap at the bottom of the column and attach the column to the suction unit for the solid-phase extraction. Remove the cap at the top of the column. Once the column liquid has drained, seal the column at the lower end using a stopper supplied for this purpose. Inject sample solution on to the column. Seal the top column with the related cap. Shake the column for 20 min at 800 rpm on an IKA shaker. Let stand for approximately 15 min. Reattach the column to the suction unit. After the sample solution has passed through the column, wash the column with approximately 10 mL water. Remaining residues of waters are removed by a weak vacuum (approximately 10 min). Elute the vitamin B12 by injecting 3 mL methanol on to the column. Use a glass vial as a collection vessel. Wash the column two times with 1 mL methanol. Remaining residues of methanol are removed by a vacuum. Place the vial in the evaporation dry block. Evaporate the methanolic vitamin B12 solution under nitrogen at approximately 60°C. Reconstitute the sample in 0.5 mL of 0.025% TFA (Trifluoroacetic acid). Decant the solution into a brown glass crimp-top vial with an integrated glass micro insert and inject into the HPLC machine.

### Conditions used for the measurement of Vitamin 812 concentration using HPLC.

| **Conditions** | **Parameters** |
|---|---|
| Flow rate: | 0.25 ml/min |
| Column: | C18 ACE 3AQ 3µm,3mm X 150mm or equivalent |
| Mobile phase: | Solution A: 0.025% TFA in water (pH 2.6) |
| | A: 0.025% TFA in water (pH 2.6) |
| | Solution B: Acetonitrile |
| Injection vol: | 100 µl (Micro litre) |
| Oven temp: | 30 °C |
| Detector wavelength | 361 nm |
| Run time: | 35 minutes |
| Retention time: | 22.5 minutes |

### Conditions used for the measurement of Vitamin C concentration using HPLC.

The amount of vitamin C in the final tea beverages were measured using a HPLC method as per the below mentioned conditions.

| **Conditions** | **Parameters** |
|---|---|
| Flow rate: | 0.8 ml/min |
| Column: | Reverse phase C18, 250x4.6mm,5um |
| Mobile phase: | 0.3mM potassium dihydrogen phosphate in 0.35% ortho phosphoric acid |
| Injection vol: | 20 µl (Micro litre) |
| Oven temp: | 30 °C |
| Detector wavelength | 248 nm |
| Run time: | 10 minutes |
| Retention time: | 5.0 minutes |

### Conditions used for the Measurement of Vitamin D3 concentration using HPLC.

The amount of vitamin D in the final tea beverages were measured using a HPLC method as per the below mentioned conditions.

| **Conditions** | **Parameters** |
|---|---|
| Flow rate: | 1.0 ml/min |
| Column: | Reverse phase C18, 250x4.6mm,5um |
| Mobile phase: | Methanol: Acetonitrile (75:25 v/v) |
| Injection vol: | 20 µl (Micro litre) |
| Oven temp: | 25 °C |
| Detector wavelength | 265 nm |
| Run time: | 15 minutes |
| Retention time: | 12.45 minutes |

### Conditions used for the Measurement of Vitamin 812 concentration using HPLC.

The amount of vitamin B12 in the final tea beverages were measured using the standard AOAC 2011.09 method for the determination of vitamin B12 in infant adult nutritional products, as described in, for example, the Journal of AOAC INTERNATIONAL, Volume 95, Issue 4, 1 July 2012, Pages 933-936.

### Conditions used for the Measurement of Vitamin 86 concentration using HPLC.

The amount of vitamin B6 in the final tea beverages were measured using the standard BS EN 14164-2008 method for determining vitamin B6 concentration using HPLC, as per the European Committee for Standardization CSN EN 14164, Category Number 560056 of 2014.

### Accelerated storage procedure used for Vit C coated neat teas.

20 g of vitamin C coated tea samples, as described herein, were taken in a ceramic petri plate and spread as thin layer and then the plate was stored in hot and humid chamber maintained at 35 °C & 90% relative humidity for 8 days in an open condition. After 8 days, the sample was taken out of the chamber and analysed for the residual Vitamin C content, using the protocol described hereinabove.

The results are summarized below in Table 1.

**Table 1 - Vitamin D3, 812, B6 and C delivery from black tea into end infusion (mg / g of tea used to make infusion).**

| **Vitamin** | **Amount of vitamin loaded on the leaf tea (mg / g)** | **Amount of vitamin delivered into the infusion (mg per 1 g of tea used to make infusion)** | **% Delivery** |
|---|---|---|---|
| D3 | 63 | 2 | 3 |
| B12 | 10 | 3.5 | 35 |
| B6 | 4 | 3 | 75 |
| C | 226 | 222 | 98 |

**Table 2 - Vitamin C retention on coated black tea (mg/g per dry tea wt) upon storage.**

| **Example** | **Total Vitamin C Retention (mg/g) DWT*** | | **% Vitamin C Remaining (Leaf total)** |
|---|---|---|---|
| | **T = 0 Days** | **T = 8 Days** | |
| Vitamin C coated tea (Example C1) | 237 | 91 | 38 |

| | | | |
|---|---|---|---|
| * DWT = dry weight of tea | | | |

As can be seen from the above data, coating beverage products, such as tea, with vitamins is challenging. Certain vitamins suffer from poor delivery to the end infusion from the coated tea product (vitamins D3 and B12). Whereas other vitamins suffer from poor storage and vitamin retention over time (vitamin C). To maximise the effectiveness of utilising beverages such as tea as vehicles for delivering vitamins into people's diets, a simple, cost effective and safe method for coating the vitamins onto the beverage is required. The coating methodology also needs to be able to protect the vitamins from degradation and loss over time, as well as suitably allowing a sufficient amount of the vitamin to be released from the beverage product and into the end drink when desired. For ease of production and for cost effectiveness, beneficially the coating methodology will be the same regardless of the vitamin used.

The present invention beneficially addresses the above problems using one simple, safe and convenient coating system for all vitamins, as is demonstrated by way of the examples presented below.

### Vitamin D fortification

### Example C1

0.25 g of vitamin D3 powder was dissolved in 35 ml of water and the mixture was homogenised well using a Silverson mixer at 1000 rpm for 3-5 minutes at 25 °C to prepare a coating solution. 99.75 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 60 °C for 5-6 minutes to get final Vitamin D3 coated tea.

### Example 1

0.25 g of vitamin D3 powder and 15 g modified starch (Octinyl Succinate Anhydrate) was dissolved in 35 ml of water and the mixture was homogenised well using a Silverson mixer at 1000 rpm for 3-5 minutes at 25 °C to prepare a coating solution. 84.75 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 60 °C for 5-6 minutes to get final Vita D3 coated tea.

### Example 2

0.25g of vitamin D3 powder and 15 g maltodextrin was dissolved in 35 ml of water and the mixture was homogenised well using a Silverson mixer at 1000 rpm for 3-5 minutes at 25 °C to prepare a coating solution. 84.75 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 60 °C for 5-6 minutes to get final Vitamin D3 coated tea.

### Example 3

0.25g of vitamin D3 powder and 15 g gum arabic was dissolved in 35 ml of water and the mixture was homogenised well using a Silverson mixer at 1000 rpm for 3-5 minutes at 25 °C to prepare a coating solution. 84.75 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 60 °C for 5-6 minutes to get final Vitamin D3 coated tea.

### Example 4

0.25g of vitamin D3 powder and 5 g gum arabic and 15 g maltodextrin were dissolved in 35 ml of water and the mixture was homogenised well using a Silverson mixer at 1000 rpm for 3-5 minutes at 25 °C to prepare a coating solution. 79.75 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 60 °C for 5-6 minutes to get final Vitamin D3 coated tea.

### Example 5

0.25g of vitamin D3 powder and 15 g gum arabic and 5 g maltodextrin were dissolved in 35 ml of water and the mixture was homogenised well using a Silverson mixer at 1000 rpm for 3-5 minutes at 25 °C to prepare a coating solution. 79.75 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 60 °C for 5-6 minutes to get final Vitamin D3 coated tea.

After the above tea products were prepared, infusions were produced from the tea products using the protocol described herein and the amount of vitamin D delivered to the infusions was determined.

The results are presented in Tables 3 and 4 below.

**Table 3 - Vitamin D3 delivery from black tea into infusion liquor using different polysaccharide binders. The total amount of binder for each of Examples 1-3 is 15% w/w based on the dry weight of the tea product. The amount of vitamin D3 is presented in mg per gram of tea used to prepare the infusion.**

| **Example** | **Amount of binder %** | **Binder** | **Vitamin D loaded onto tea leaf (mg / g)** | **Vitamin D in Infusion (mg / g)** | **% Delivery** |
|---|---|---|---|---|---|
| C1 | - | - | 62.5 | 2 | 3 |
| 1 | 15 | Modified Starch | 62.5 | 20 | 32 |
| 2 | 15 | Maltodextrin | 62.5 | 27 | 43 |
| 3 | 15 | Gum Arabic | 62.5 | 35 | 56 |

**Table 4 - Vitamin D3 delivery from black tea into infusion liquor using different polysaccharide binders. The total amount of binder for each of Examples 4-5 is 20 % w/w based on the dry weight of the tea product. The amount of vitamin D3 is presented in mg per gram of tea used to prepare the infusion.**

| **Example** | **Amount of binder %** | **Binder** | **Vitamin D3 loaded onto tea leaf (mg / g)** | **Vitamin D3 in Infusion (mg / g)** | **% Delivery** |
|---|---|---|---|---|---|
| C1 | - | - | 62.5 | 2 | 3 |
| 4 | 20 | Gum Arabic and Maltodextrin (3:1) | 62.5 | 42 | 67 |
| 5 | 20 | Gum Arabic and Maltodextrin (1:3) | 62.5 | 38 | 61 |

### Vitamin B12 fortification

### Example C2

1 mg of methylcobalamin (vitamin B12, solubility: 1.25 g/100ml of water at 25 °C) was mixed with 30 ml of distilled water (at 25 °C) to prepare a coating solution. 99.9 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B12 coated tea.

### Example 6

1 mg of methylcobalamin (vitamin B12, solubility: 1.25 g/100ml of water at 25 °C) and 5 g of Maltodextrin were mixed with 30 ml of distilled water (at 25 °C) to prepare a coating solution. 95 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B12 coated tea.

### Example 7

1 mg of methylcobalamin (vitamin B12, solubility: 1.25 g/100ml of water at 25 °C) and 5 g of gum acacia were mixed with 30 ml of distilled water (at 25 °C) to prepare a coating solution. 95 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B12 coated tea.

### Example 8

1 mg of methylcobalamin (vitamin B12, solubility: 1.25 g/100ml of water at 25 °C) and 2.5 g of gum acacia, 2.5 g maltodextrin were mixed with 30 ml of distilled water (at 25 °C) to prepare a coating solution. 95 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B12 coated tea.

After the above tea products were prepared, infusions were produced from the tea products using the protocol described herein and the amount of vitamin B12 delivered to the infusions was determined.

The results are presented in Table 5 below.

**Table 5 - Vitamin B12 delivery from black tea into infusion liquor using different polysaccharide binders. The total amount of binder for each of Examples 5-6 is 5 % w/w based on the dry weight of the tea product. The amount of vitamin 812 is presented in mg per gram of tea used to prepare the infusion.**

| **Example** | **Amount of Binder %** | **Binder** | **Vitamin B12 loaded onto tea leaf (mg / g)** | **Vitamin B12 in Infusion (mg / g)** | **% Delivery** |
|---|---|---|---|---|---|
| C2 | - | - | 10 | 3.5 | 35 |
| 6 | 5 | Maltodextrin | 10 | 3.2 | 32 |
| 7 | 5 | Gum Arabic | 10 | 5.7 | 57 |
| 8 | 5 | Gum Arabic and Maltodextrin (1:1) | 10 | 4.9 | 49 |

### Vitamin B6 fortification

### Example C3

0.4 g of pyridoxine hydrochloride (vitamin B6, solubility: 22 g / 100 ml of water at 25 °C) in 30 ml of distilled water (at 25 °C) to prepare a coating solution. 99.4 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B6 coated tea.

### Example 9

0.4 g of pyridoxine hydrochloride (vitamin B6, solubility: 22 g / 100 ml of water at 25 °C) and 5 g of gum acacia were mixed with 30 ml of distilled water (at 25 °C) to prepare a coating solution. 94.6 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B6 coated tea.

### Example 10

0.4 g of pyridoxine hydrochloride (vitamin B6, solubility: 22 g / 100 ml of water at 25 °C) and 5 g of maltodextrin were mixed with 30 ml of distilled water (at 25 °C) to prepare a coating solution. 94.6 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B6 coated tea.

### Example 11

0.4 g of pyridoxine hydrochloride (vitamin B6, solubility: 22 g / 100 ml of water at 25 °C) and 2.5 g of maltodextrin and 2.5 g of Gum acacia were mixed with 30 ml of distilled water (at 25 °C) to prepare a coating solution. 94.6 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B6 coated tea.

After the above tea products were prepared, infusions were produced from the tea products using the protocol described herein and the amount of vitamin B6 delivered to the infusions was determined.

The results are presented in Table 6 below.

**Table 6 - Vitamin B6 delivery from black tea into infusion liquor using different polysaccharide binders. The total amount of binder for each of Examples 9-11 is 5 % w/w based on the dry weight of the tea product. The amount of vitamin B6 is presented in mg per gram of tea used to prepare the infusion.**

| **Examples** | **Amount of Binder %** | **Binder** | **Amount of vitamin B6 loaded on leaf tea (mg/g) tea)** | **Amount of vitamin B6 delivered into the infusion (mg / 1g of tea used to make infusion)** | **% Delivery** |
|---|---|---|---|---|---|
| C3 | - | - | 4 | 3 | 75 |
| 9 | 5 | Gum Arabic | 4 | 2.9 | 73 |
| 10 | 5 | Maltodextrin | 4 | 2.7 | 68 |
| 11 | 5 | Gum Arabic and Maltodextrin (1:1) | 4 | 2.8 | 70 |

### Multivitamin fortification

### Example 12

2.5 g of gum arabic, 2.5 g of maltodextrin, 0.4 g of vitamin B6 (Pyridoxine hydrochloride) and 1 mg of vitamin B12 (methylcobalamin) were mixed with 30 ml of distilled water (at 25 °C) to prepare a coating solution. 95 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 105 °C for 5 minutes to get final Vitamin B12 coated tea.

After the above tea product was prepared, an infusion was produced from the tea product using the protocol described herein and the amount of vitamin B12 and B6 delivered to the infusion was determined.

The results are presented in Table 7 below.

**Table 7 - Vitamin 86 and 812 delivery from black tea into infusion liquor using a tea product coated with both vitamins. The total amount of binder for each of Examples C2, C3 (no binders) and 12 is 5 % w/w based on the dry weight of the tea product. The amount of vitamin B6 and 812 is presented in mg per gram of tea used to prepare the infusion.**

| **Examples** | **Amount of Binder %** | **Binder** | **Amount of vitamin loaded on leaf tea (mg/g) tea)** | **Amount of vitamin delivered into the infusion (mg / 1g of tea used to make infusion)** | **% Delivery** |
|---|---|---|---|---|---|
| **Vitamin B12** | | | | | |
| C2 | - | - | 10 | 3.5 | 35 |
| 12 | 5 | Gum Arabic and Maltodextrin (1:1) | 9 | 4.0 | 44 |

| **Vitamin B6** | | | | | |
|---|---|---|---|---|---|
| C3 | - | - | 4 | 3 | 75 |
| 12 | 5 | Gum Arabic and Maltodextrin (1:1) | 4 | 3.8 | 95 |

### Vitamin C fortification

### Example C4

30 g of L-ascorbic acid (solubility: 33 g / 100g water at 25 °C) was mixed in 100 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 10 minutes.

### Example 13

30 g of L-ascorbic acid (solubility: 33 g / 100g water at 25 °C) and 5 g of gum acacia were mixed in 100 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 10 minutes.

### Example 14

30 g of L-ascorbic acid (solubility: 33 g / 100g water at 25 °C) and 5 g of maltodextrin were mixed in 100 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 10 minutes.

### Example 15

30 g of L-ascorbic acid (solubility: 33 g / 100g water at 25 °C), 2.5 g of gum acacia and 2.5 g of maltodextrin were mixed in 100 g of distilled water (at 25°C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 10 minutes.

### Example 16

30 g of L-ascorbic acid (solubility: 33 g / 100g water at 25 °C), 1.65 g of gum acacia and 3.35 g of maltodextrin were mixed in 100 g of distilled water (at 25°C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 10 minutes.

### Example 17

30 g of L-ascorbic acid (solubility: 33 g / 100g water at 25 °C), 3.35 g of gum acacia and 1.65 g of maltodextrin were mixed in 100 g of distilled water (at 25°C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 10 minutes.

**Table 8 - Vitamin C retention in black tea (mg/g per dry tea wt) upon storage.**

| **Example** | **Binder (5 w/w %)** | **Ratio of Binders** | **Total Vitamin C Retention (mg/g) dry weight of tea** | | **% Vitamin C Remaining (Leaf total)** | **Percentage Improvement in Vitamin C Retention (%)** |
|---|---|---|---|---|---|---|
| | | | **T = 0 Days** | **T = 8 Days** | | |
| C1 | - | - | 237 | 91 | 38 | - |
| 13 | Gum Arabic | - | 227 | 104 | 46 | 21 |
| 14 | Maltodextrin | - | 232 | 102 | 44 | 16 |
| | | | | | | |
| 15 | Gum Arabic and Maltodextrin | 1:1 | 232 | 129 | 56 | 47 |
| 16 | Gum Arabic and Maltodextrin | 1:2 | 232 | 123 | 53 | 39 |
| 17 | Gum Arabic and Maltodextrin | 2:1 | 225 | 119 | 53 | 39 |

### Example A1: Black Tea + Vitamin C+ Binders

30 g of L-ascorbic acid (solubility: 33 g / 100 g water at 25°C), 2.5 g of gum acacia and 2.5 g of maltodextrin were mixed in 100 g of distilled water (at 25 °C) to prepare a coating solution. After through mixing the pH of the coating solution was measured as 3. 100g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 10 minutes. Then, 2 g the vitamin C coated black tea (obtained from Kenya) was then used to prepare a tea infusion as mentioned in the infusion preparation protocol described above.

### Example A2: Black Tea + Vitamin C+ Binders

30 g of L-ascorbic acid (solubility: 33 g / 100 g water at 25°C), 2 g of gum acacia and 3 g of maltodextrin were mixed in 100 g of distilled water (at 25 °C) to prepare a coating solution. After through mixing the pH of the coating solution was measured as 3. 100g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 10 minutes. Then, 2 g the vitamin C coated black tea (obtained from Kenya) was then used to prepare a tea infusion as mentioned in the infusion preparation protocol described above.

### Example A: Black Tea + Vitamin C

30 g of L-ascorbic acid (solubility: 33 g / 100 g water at 25°C) was mixed in 100 g of distilled water (at 25 °C) to prepare a coating solution. After through mixing the pH of the coating solution was measured as 3. 100g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 10 minutes. Then, 2 g the vitamin C coated black tea (obtained from Kenya) was then used to prepare a tea infusion as mentioned in the infusion preparation protocol described above.

**Table 9 - Table showing levels of Vitamin C in the tea leaf and infusion cup**

| **Type** | **Total Vitamin C in the leaf tea tea (mg/2 g tea)** | **Delivered Vitamin C into the infusion (mg/2g brew)** | **% Delivery of Vitamin C to infusion** |
|---|---|---|---|
| A1 | 474 | 443 | 93.5 |
| A2 | 452 | 444 | 98.2 |
| A | 448 | 438 | 97.8 |

From the above table it is evident that the vitamin C fortified beverage compositions of the invention achieve excellent delivery of the vitamin C to the end cup.

Therefore, from the description of the invention is it clear that by way of present invention it is now possible to provide vitamin fortified beverage compositions which are stable, do not impact on the visual appearance of the beverage product and beneficially deliver a substantial amount of vitamin to the end infusion liquor.

## Claims

1. A beverage composition comprising;
a) one or more vitamins;
b) a first polysaccharide comprising gum arabic and/or xanthan gum;
c) optionally, a second polysaccharide comprising maltodextrin and/or modified starch; and,
d) a beverage product.

2. A composition according to claim 1 wherein the one or more vitamins are selected from vitamin C, vitamin D, vitamin B6, vitamin B12, vitamin E, vitamin A, vitamin B1, vitamin B2, vitamin B3, vitamin B9, vitamin K, Vitamin B7 and combinations thereof.

3. A composition according to claim 1 or claim 2 wherein the one or more vitamins are selected from vitamin C, vitamin D, vitamin B6, vitamin B12, Vitamin B7 and combinations thereof.

4. A composition according to claim 1 wherein the ratio of first polysaccharide to second polysaccharide is between 1:1 to 1:4.

5. A composition according to claim 1 wherein the first polysaccharide and second polysaccharide are present in a combined amount of between 5 and 25% by weight of the composition.

6. The composition according to any one of the preceding claims wherein the first polysaccharide is gum arabic.

7. The composition according to claim 6, wherein the gum arabic is present in the range of 0.5 to 6% by weight of the composition.

8. The composition according to any one of the preceding claims wherein the second polysaccharide is maltodextrin.

9. The composition according to claim 8, wherein the maltodextrin is present in the range of 0.5 to 5% by weight of the composition.

10. The composition according to any preceding claim wherein the beverage product is a leaf tea product.

11. The composition according to claim 10 wherein the leaf tea product is selected from a black tea product, a green tea product, an oolong tea product, a white tea product or blends thereof.

12. The composition according to claim 10, wherein the leaf tea product is a herbal tea product optionally selected from a rooibos tea product, a hibiscus tea product, a chamomile tea product or blends thereof.

13. The composition according to any one of the preceding claims wherein the amount of beverage product in the composition is in the range of 85 to 98.5% by weight of the composition.

14. The composition as claimed in any one of the preceding claims wherein the composition comprises one or more additional agents, optionally selected from nutrients, flavourings, metals and minerals, bulking agents, anti-caking agents (e.g. silicon dioxide) and cocoa extract.

15. A process for preparing a beverage composition comprising the steps of:
a) preparing a coating solution by adding, and optionally mixing, one or more vitamins, a first polysaccharide comprising gum arabic and/or xanthan gum and optionally a second polysaccharide comprising maltodextrin and/or modified starch with water;
b) adding the coating solution of step a) to a beverage product and mixing for a duration of between 1 and 30 minutes;
c) drying the mixture of step b) at a temperature of between 90 °C and 160 °C for a duration of between 2 and 60 minutes.
